# FASCICULE DE BREVET EUROPEEN

(11) **EP 1 252 031 B1**
(45) Date de publication et mention de la délivrance du brevet: **09.06.2004**
(21) Numéro de dépôt: 01902345.6
(22) Date de dépôt: 22.01.2001
(51) Int. Cl.: B60C 17/02

(54) **BANDAGE DE SOUTIEN D'UN PNEUMATIQUE POUR ROULAGE A PLAT**
STÜTZREIFEN FÜR EINEN NOTLAUFREIFEN
TYRE SUPPORT FOR A RUNFLAT PNEUMATIC TYRE

(30) Priorité: 20.01.2000 FR 0000814
(43) Date de publication de la demande: 30.10.2002
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: CLOUET, Alain, F-63270 Saint-Maurice (FR)
(74) Mandataire: Diernaz, Christian
(86) Numéro de dépôt international: PCT/EP2001/000649
(87) Numéro de publication internationale: WO 2001/053120

(56) Documents cités:
- DE-A- 2 520 321
- FR-A- 2 403 217
- FR-A- 2 756 221
- FR-A- 2 772 666
- US-A- 2 354 912

## Description

L'invention concerne un moyen de support de bande de roulement d'un pneumatique. Ledit moyen de support constitue avec ledit pneumatique et sa jante de montage un ensemble roulant pour véhicule, destiné à pouvoir rouler après une perte de pression conséquente et inattendue du pneumatique, ledit pneumatique étant plus particulièrement un pneumatique sans chambre de type Poids-Lourds ou Génie Civil.

La demande française FR 2 756 221 décrit et revendique, en tant que moyen de support ou de soutien de bande de roulement, une membrane torique en caoutchouc renforcé, gonflée à une pression p₀ supérieure à la pression p₁ de la cavité du pneumatique, et ayant, à l'état gonflé, un rayon de sommet R_{M} inférieur au rayon écrasé R_{E} du pneumatique utilisé à sa pression recommandée, ladite membrane étant au moins en son sommet renforcée par au moins une nappe de fils ou câbles, ledit sommet de ladite membrane comprenant en outre au moins une armature de frettage de fils ou câbles orientés circonférentiellement et présentant une force de rupture par cm de nappe au moins égale au produit du rayon de sommet R_{M} par la pression, par cm² de surface de ladite nappe, conduisant à une tension par cm de nappe équivalente à la tension due à la force centrifuge maximale à laquelle peut être soumis le pneumatique et permettant la rupture des fils ou câbles de frettage pour un différentiel de pression p₀ - p'₁, existant en cas de perte de pression subie par le pneumatique, supérieur au différentiel de pression p₀ - p₁ initial, c'est-à-dire en roulage normal. Ladite armature de frettage peut être composée d'au moins une nappe, située généralement parmi les nappes de renforcement de sommet, ou de plusieurs bandes situées dans les évidements créés sur la couche protectrice recouvrant radialement les nappes sous-jacentes.

La pression intérieure p₀ de ladite membrane, mesurée à froid, c'est-à-dire à 20°C, est supérieure à la pression p₁ de la cavité interne du pneumatique d'une quantité comprise entre 0,5.10⁵ Pa et 5,0.10⁵ Pa, selon les dimensions de pneumatique concernées. Étant donné que le rayon sommet R_{M} de la membrane torique est préférentiellement compris entre 0,80 et 0,97 fois le rayon écrasé R_{E} du pneumatique, principalement pour des raisons d'échauffement dudit pneumatique, une différence de pression trop forte risque d'altérer un certain nombre de propriétés du pneumatique lui-même, par exemple l'endurance de l'armature de carcasse dudit pneumatique, tout en exigeant une armature de frettage trop importante.

Le sommet de la dite membrane est préférentiellement renforcé par deux nappes de fils ou câbles parallèles entre eux dans chaque nappe et croisés d'une nappe à la suivante en faisant avec la direction circonférentielle un angle compris entre 50° et 85°. Les câbles ou fils sont avantageusement textiles pour des raisons de légèreté, de souplesse et de bonne tenue à la corrosion, et préférentiellement en polyamide aromatique. Les extrémités axiales des deux nappes sont préférentiellement situées sur les flancs de la membrane, de sorte que, si l'on appelle S la largeur axiale maximale de l'armature de carcasse du pneumatique, la largeur des nappes est préférentiellement comprise entre S et 1,30 S.

La différence de pression p₀ - p₁ augmente en cas de crevaison du pneumatique et les câbles de la ou des nappes de frettage se rompent, la membrane de soutien torique s'expand dans la cavité du pneumatique et permet le roulage de l'ensemble malgré la chute de pression dans la cavité du pneumatique.

Une telle membrane a, par la suite, fait l'objet de plusieurs perfectionnements : le brevet FR 2 772 666, correspondant au préambule de la revendication 1, concerne l'introduction d'éléments de renforcement annulaires permettant l'enroulement de la (les) nappe(s) de renforcement de flancs, les dits éléments étant de constitution permettant leur rupture pour sensiblement le même différentiel de pression p₀ - p'₁ et en conséquence l'expansion de ladite membrane dans la cavité du pneumatique. Un deuxième perfectionnement a consisté à doter la (les) nappe(s) de renforcement de flancs de la membrane d'éléments formés d'une part d'une âme susceptible de se rompre pour un différentiel de pressions donné et d'autre part d'un câble enroulé hélicoïdalement autour de ladite âme, de manière à permettre un allongement considérable des éléments de renforcement de nappes de flanc et ainsi permettre l'expansion. L'emploi de tels câbles, avec des courbes force-allongement représentées par sensiblement deux segments de droite adjacents à pentes différentes, a permis l'adoption de plusieurs architectures d'armature de sommet de la membrane, armature de sommet nécessaire pour résister à la perforation de la membrane elle-même et complétée par l'armature de frettage d'éléments de renforcement circonférentiels, destinée à maintenir le sommet de ladite membrane dans sa position initiale, c'est-à-dire en roulage normal avec les pressions désirées dans la membrane et dans le pneumatique.

Les architectures citées ne répondent pas aux conditions qui ont été fixées pour le roulage d'un tel ensemble, lorsque la pression de la cavité du pneumatique est annulée suite à une perforation, et que l'ensemble roule à une pression diminuée. La résistance de la membrane à un objet coupant et perforant, animé du même mouvement de rotation que l'ensemble roulant, doit être très largement améliorée.

A cet effet et conformément à l'invention, la membrane torique , utilisée comme moyen de soutien de bande de roulement d'un pneumatique P et formant avec ledit pneumatique P et sa jante de montage J un ensemble pouvant rouler lorsque le pneumatique est sujet à une perte de pression, ladite membrane étant expansible, capable de remplir la cavité intérieure du pneumatique, constituée d'une chape renforcée par une armature de frettage et réunie au moyen de deux flancs renforcés par une armature de carcasse à deux bourrelets, chaque bourrelet comprenant au moins un anneau de renforcement inextensible et résistant autour duquel est ancrée l'armature de carcasse par retournement, est caractérisée en ce que, radialement au-dessus d'une couche de caoutchouc intérieure imperméable aux gaz de gonflage, existe une armature de sommet d'au moins deux nappes d'éléments de renforcement textiles, croisés d'une nappe à la suivante en faisant avec la direction circonférentielle des angles compris entre 40° et 75°, ladite armature de sommet étant désolidarisée de ladite couche intérieure sur une distance méridienne égale à sa largeur et surmontée radialement par les bords de deux demi-nappes de carcasse s'étendant dans les flancs tout en étant désolidarisée des dits bords, chaque demi-nappe de carcasse étant retournée dans chaque bourrelet autour d'un anneau de renforcement et formée d'éléments de renforcement textiles orientés par rapport à la direction circonférentielle avec un angle compris entre 40° et 75°, les dits bords de part et d'autre du plan équatorial étant réunis radialement à l'extérieur par au moins une nappe de liaison d'éléments textiles, l'ensemble des dits bords et de la nappe de liaison étant surmonté radialement par une armature de frettage composée d'au moins une nappe d'éléments circonférentiels et textiles, les éléments de renforcement de l'armature de frettage et les éléments de la nappe de liaison ayant des résistances leur permettant de rompre pour un différentiel de pressions p₀ - p'₁, existant en cas de perte de pression dans la cavité intérieure du pneumatique, supérieur au différentiel de pression initial p₀ - p₁ existant en roulage normal.

L'armature de frettage est de manière avantageuse partiellement désolidarisée de l'ensemble formé par les demi-nappes de carcasse et la nappe de liaison des bords des dites demi-nappes, ce qui permet de combiner les deux avantages que sont d'une part la non dispersion après rupture des éléments de renforcement de l'armature de frettage et d'autre part la souplesse maximale du sommet de la membrane de support.

Il faut entendre par armature, nappe ou couche désolidarisées d'une armature, d'une nappe ou d'une couche, une armature, une nappe ou couche ne présentant aucun collage à l'état vulcanisé avec l'armature, la nappe ou la couche qui lui est radialement adjacente, ledit manque absolu de collage étant obtenu par l'emploi avant vulcanisation de la membrane d'un produit anti-collant, par exemple d'une solution à base de stéarates et de poudre métallique.

Les caractéristiques de l'invention seront mieux comprises à l'aide de la description qui suit et qui se réfère au dessin illustrant à titre non limitatif un exemple d'exécution, dessin sur lequel :

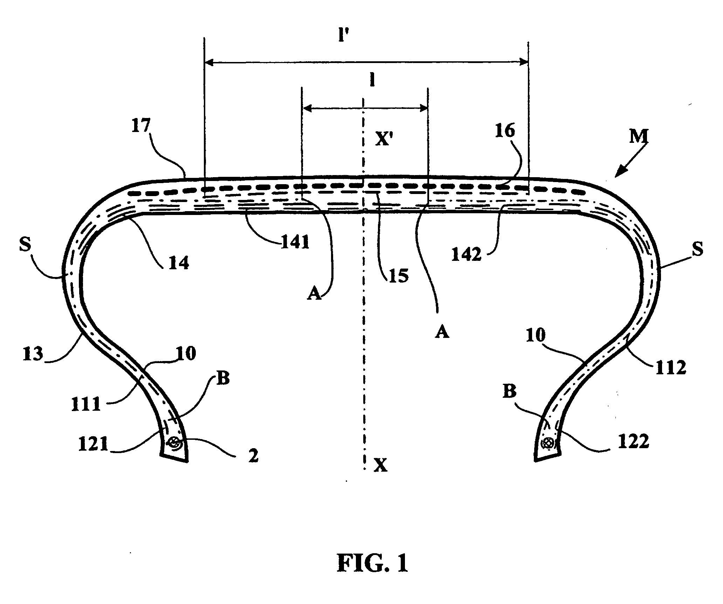

- la figure 1 représente schématiquement une membrane torique de soutien conforme à l'invention,
- la figure 2 représente schématiquement la membrane de la figure 1 en position dans le pneumatique monté sur sa jante de service et gonflé.

La membrane M de support, conforme à l'invention, comprend une chape 17 réunie par l'intermédiaire de deux flancs 13 à deux bourrelets B de part et d'autre du plan équatorial XX'. Ladite membrane M est fermée et comporte à l'intérieur une couche de mélange caoutchouteux 10 à base d'élastomère halogéné, couche imperméable aux gaz de gonflage généralement utilisés dans l'industrie du pneumatique. Ladite couche 10 est, lors de la confection de la membrane, de manière uniforme et par des moyens appropriés, recouverte sur une longueur méridienne, sensiblement égale à la longueur comprise entre les deux points S de la membrane entre lesquels est mesurée parallèlement à l'axe de rotation de l'ensemble roulant la largeur axiale maximale intérieure, d'un badigeon à base de stéarates, produits connus pour leur propriété d'anti-collant à l'état vulcanisé. Est posée au sommet de la membrane et sur ladite couche intérieure badigeonnée 10 une armature de sommet 14 composée de deux nappes 141 et 142 de câbles en polyester noyés dans un calandrage de mélange caoutchouc adapté, parallèles entre eux dans chaque nappe et croisés d'une nappe 141 à la suivante 142 en faisant avec la direction circonférentielle des angles α, α' égaux à 60°. Il est bien entendu que les angles α et α' peuvent être inégaux entre eux, et peuvent être compris entre 40° et 75° sans sortir du cadre de l'invention. Les deux nappes 141 et 142 ont des largeurs axiales sensiblement égales, et inférieures à la longueur méridienne badigeeonnée, de sorte que les dites deux nappes 141 et 142 soient complètement désolidarisées de la couche intérieure étanche 10. Les dites nappes 141 et 142 sont sur leur largeur axiale recouvertes radialement du même badigeon anti-collant que celui utilisé sur la couche intérieure, ce qui confère à l'armature de sommet la propriété d'être absolument libre à l'intérieur même de la membrane M.

L'armature de carcasse 11 est formée de deux demi-nappes 111 et 112, les dites demi-nappes étant dans chaque bourrelet ancrées par enroulement autour d'un élément de renforcement annulaire 2 pour former des retournements 121 et 122. Chaque élément annulaire de renforcement (2) est formé par l'enroulement de câbles en polyamide aromatique 167x2. Une telle composition confère audit élément annulaire une extensibilité presque parfaite et une résistance à la rupture au moins égale à 1,05 fois la résistance nécessaire induite par la tension exercée sur l'élément annulaire des éléments de renforcement de la nappe de flanc : ainsi l'élément annulaire (2) peut être dans les conditions citées qualifié d'inextensible et incassable. Ledit élément annulaire, permettant d'assurer l'étanchéité entre la membrane et le pneumatique, est disposé radialement le plus près possible de la jante de montage du pneumatique, et, dans le cas montré, son diamètre intérieur est compris entre le diamètre nominal de la jante D_{S} et la valeur D_{S} diminuée du produit L_{S} . tgδ, L_{S} étant la largeur axiale du siège de bourrelet de pneumatique et tgδ la tangente de l'angle d'inclinaison du siège de la jante de montage.

Aux épaules et dans la majeure partie du sommet de la membrane, les demi-nappes 111 et 112 recouvrent radialement les deux nappes d'armature de sommet 141 et 142 tout en étant désolidarisées, radialement au-dessus des points S de largeur axiale maximale, des dites nappes 141 et 142 par une couche de produit d'anti-collant. Les dites demi-nappes 111 et 112 présentent des extrémités A situées de part et d'autre du plan équatorial XX', et sont radialement au-dessous des deux points S parfaitement solidaires de la couche intérieure 10. Les demi-nappes 111 et 112 sont formées de câbles en polyamide aromatique, parallèles entre eux et inclinés par rapport à la direction circonférentielle dans chaque demi-nappe du même angle α (même direction et même valeur) que celui de la nappe de sommet 142 la plus éloignée radialement de l'axe de rotation. Les deux bords des deux demi-nappes 111 et 112 sont réunis axialement par une nappe de liaison 15 s'étendant de part et d'autre du plan équatorial XX' avec une largeur axiale l' sensiblement égale à 5 fois la largeur axiale 1 séparant les deux extrémités a des demi-nappes 111 et 112, largeur 1 qui est comprise entre 3% et 8% de la largeur axiale maximale intérieure. Ladite nappe de liaison 15 est formée de fils de rayonne faisant avec la direction circonférentielle un angle de valeur comprise entre l'angle α des câbles des deux demi-nappes 111 et 112 et 90°. Entre la face supérieure de la nappe 142 et la nappe 15 de liaison est disposée la même couche de badigeon anti-collant que celle qui désolidarise les demi-nappes 111 et 112 de la nappe 142, la nappe 15 étant aussi désolidarisée de l'armature de sommet formée des nappes 141, 142 sur la largeur axiale l'. Une armature de frettage , composée dans le cas étudié d'une seule nappe 16 d'éléments de renforcement en polyamide aromatique et circonférentiels, c'est-à-dire formant avec la direction circonférentielle un angle de 0° ± 2,5°, est aussi désolidarisée des deux demi-nappes 111 et 112 et de la nappe 15 par un badigeon anti-collant. La nappe 16 de frettage et la nappe de liaison 15 assurent la fonction de frettage de la membrane M, d'une part contre les efforts dus à la force centrifuge à laquelle est soumis le sommet de la membrane lors du roulage de l'ensemble roulant et d'autre part contre les efforts dus au différentiel de pressions p₀ - p₁, p₀ étant la pression de gonflage de la membrane torique M, égale par exemple à 10.10⁵ Pa, supérieure à la pression p₁ du pneumatique , égale par exemple à 9,0. 10⁵ Pa. La fonction de frettage permet à la membrane M et à son sommet de conserver, dans les conditions normales de roulage de l'ensemble roulant, c'est-à-dire dans les conditions de charge, de pression et de vitesse recommandées pour le pneumatique concerné, un rayon de sommet de membrane, défini comme étant le rayon du point de la membrane le plus éloigné de l'axe de rotation et mesuré dans le plan équatorial, pratiquement constant et inférieur au rayon écrasé du pneumatique dans les conditions normales de roulage.

Par contre, la nature et la structure des éléments de renforcement de la nappe de frettage 16 et de la nappe de liaison 15 sont choisies de telle manière qu'ils puisent se rompre pour un différentiel de pression p₀ - p'₁, existant en cas de perte de pression subie par le pneumatique, p'₁ étant alors inférieur à p₁ et le différentiel p₀ - p'₁ supérieur à p₀ - p₁.

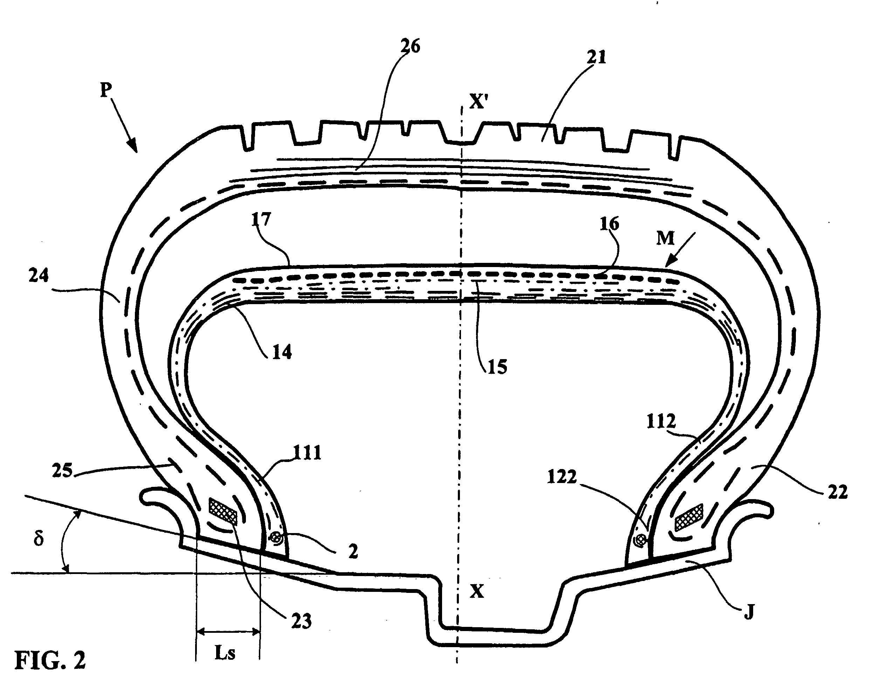

Sur la figure 2, l'ensemble E est composé du pneumatique P, de dimension 495/45-R-22.5 dans l'exemple décrit, de la jante de montage J, et de la membrane torique M conforme à l'invention. Le pneumatique P est un pneumatique universellement connu, avec des flancs réunis radialement à l'extérieur à une bande de roulement (21) et prolongés radialement à l'intérieur à deux bourrelets (22), chaque bourrelet (22) étant renforcé par au moins une tringle (23) autour de laquelle vient s'ancrer une armature de carcasse radiale (24) pour former des retournements (25). Ladite armature de carcasse (24) est surmontée radialement dans le sommet par une armature de sommet (26), composée d'au moins deux nappes de fils ou câbles métalliques parallèles entre eux dans chaque nappe et croisés d'une nappe à la suivante en faisant avec la direction circonférentielle un angle pouvant être compris entre 5° et 45°. Le pneumatique P est dit sans chambre, et comprend intérieurement une couche de mélange de caoutchouc imperméable aux gaz de gonflage.

La structure de membrane décrite ci-dessus permet non seulement, après crevaison et dégonflage du pneumatique, de se déployer totalement et ainsi de conserver sensiblement la forme dudit pneumatique, sans cependant provoquer de détériorations internes du pneumatique pendant les phases de roulage normal, mais aussi de permettre de pouvoir rouler , l'élément perforant étant ancré dans le pneumatique et dépassant la paroi interne d'une distance sensiblement égale à 30 mm, sur une distance d'au moins 60 km, la pression interne de l'ensemble roulant étant la pression abaissée après déploiement de la membrane, pour atteindre une station de gonflage et rouler après regonflage à la pression nominale, l'objet perforant étant encore en place, sur une distance d'au moins 500 km, distance permettant alors de trouver un atelier de réparation pneumatique.

## Revendications

1. Membrane torique M, utilisée comme moyen de soutien de bande de roulement d'un pneumatique P et formant avec ledit pneumatique P et sa jante de montage J un ensemble pouvant rouler lorsque le pneumatique P est sujet à une perte de pression, ladite membrane M étant expansible, capable de remplir la cavité intérieure du pneumatique P, constituée d'une chape (17) renforcée par une armature de frettage (16) et réunie au moyen de deux flancs ( 13), renforcés par une armature de carcasse (11), à deux bourrelets B, chaque bourrelet B comprenant au moins un anneau de renforcement (2) inextensible et résistant autour duquel est ancrée l'armature de carcasse (11) par retournement, **caractérisée en ce que**, radialement au-dessus d'une couche de caoutchouc intérieure (10) imperméable aux gaz de gonflage, existe une armature de sommet (14) d'au moins deux nappes (141, 142) d'éléments textiles, croisés d'une nappe (141) à la suivante (142) en faisant avec la direction circonférentielle des angles compris entre 40° et 75°, ladite armature de sommet étant désolidarisée de ladite couche intérieure (10) sur une distance méridienne égale à sa largeur et surmontée radialement par les bords de deux demi-nappes de carcasse (111, 112) s'étendant dans les flancs (13) tout en étant désolidarisée des dits bords, chaque demi-nappe de carcasse étant formée d'éléments de renforcement textiles orientés par rapport à la direction circonférentielle avec un angle compris entre 40° et 75°, les dits bords de part et d'autre du plan équatorial XX' étant réunis par au moins une nappe de liaison (15) d'éléments textiles, l'ensemble des dits bords et de la nappe de liaison (15) étant surmonté par une armature de frettage (16) composée d'au moins une nappe (16) d'éléments circonférentiels et textiles, les éléments de renforcement de l'armature de frettage (16) et les éléments de la nappe de liaison (15) ayant des résistances leur permettant de rompre pour un différentiel de pressions p₀- p'₁, existant en cas de perte de pression dans la cavité intérieure du pneumatique, supérieur au différentiel de pression initial p₀ - p₁ existant en roulage normal.

2. Membrane selon la revendication 1, **caractérisée en ce que** l'armature de frettage (16) est partiellement désolidarisée de l'ensemble formé par les demi-nappes de carcasse (111, 112) et la nappe de liaison (15) des bords des dites demi-nappes.

## Patentansprüche

1. Torusförmige Membran M, die als Unterstützungsmittel der Lauffläche eines Reifens P verwendet wird und mit dem genannten Reifen P und seiner Montagefelge J eine Baugruppe bildet, die rollen kann, wenn der Reifen P einem Druckverlust ausgesetzt wurde, wobei die genannte Membran M ausweitbar ist, die imstande ist, den Innenhohlraum des Reifens P auszufüllen, und die von einer Abdeckung (17) gebildet ist, die von einer Umhüllungsbewehrung (16) verstärkt ist und mittels zweier Flanken (13), die durch eine Karkassenbewehrung (11) verstärkt sind, mit zwei Wülsten B vereint ist, wobei jeder Wulst B mindestens einen undehnbaren und beständigen Verstärkungsring (2) aufweist, rund um den die Karkassenbewehrung (11) durch einen Umschlag verankert ist, **dadurch gekennzeichnet, daß** radial über einer inneren, für Aufpumpgas undurchlässigen Kautschukschicht (10) eine Scheitelbewehrung (14) aus mindestens zwei Lagen (141, 142) aus textilen Elementen vorliegt, die von einer Lage (141) zur folgenden (142) unter Bildung von Winkeln zur Umfangsrichtung überkreuz laufen, die zwischen 40° und 75° liegen, wobei die genannte Scheitelbewehrung von der genannten, inneren Schicht (10) über eine Meridianstrecke getrennt ist, die ihrer Breite gleicht, und die radial durch die Ränder von zwei Karkassen-Halblagen überdeckt ist (111, 112), die sich in den Flanken (13) erstrecken, während sie gleichzeitig von den genannten Rändern getrennt sind, wobei jede Karkassen-Halblage von textilen Verstärkungselementen gebildet ist, die bezüglich der Umfangsrichtung unter einem Winkel ausgerichtet sind, der zwischen 40° und 75° liegt, wobei die genannten Ränder beiderseits der Äquatorialebene XX' durch mindestens eine Verbindungslage (15) aus Textilelementen verbunden ist, wobei über der Gruppe aus den genannten Rändern und der Verbindungslage (15) eine Umhüllungsbewehrung (16) angebracht ist, die aus mindestens einer Lage (16) aus Elementen zusammengesetzt ist, die in Umfangsrichtung verlaufen und textil sind, und wobei die Verstärkungselemente der Umhüllungsbewehrung (16) und die Elemente der Verbindungslage (15) Widerstände aufweisen, die es ihnen gestatten, bei einem Unterschied der Drücke p₀ - p'₁ zu brechen, der im Fall des Druckverlustes im Innenhohlraum des Reifens vorliegt, der größer ist als der anfängliche Druckunterschied p₀ - p₁, der bei normaler Fahrt vorliegt.

2. Membran nach Anspruch 1, **dadurch gekennzeichnet, daß** die Umhüllungsbewehrung (16) teilweise von der Baugruppe getrennt ist, die von den Karkassen-Halblagen (111, 112) und der Lage (15) zur Verbindung der Ränder der genannten Halblagen gebildet ist.

## Claims

1. Toroidal membrane M used as a support means for the tread of a tyre P and forming together with the said tyre P and its mounting rim J an assembly that can roll when the tyre P suffers a loss of pressure, the said membrane M being expandable, capable of filling the internal cavity of the tyre P, consisting of a cap (17) reinforced by a hooping reinforcement (16) and connected via two sidewalls (13) reinforced by a carcass reinforcement (11) to two beads B, each bead B comprising at least one inextensible and strong reinforcement ring (12) around which the carcass reinforcement (11) is turned up to anchor it,
**characterised in that**
radially above an internal rubber layer (10) impermeable to the inflation gases there is a crown reinforcement (14) of at least two plies (141, 142) of textile elements, crossed from one ply (141) to the next (142) and making with the circumferential direction angles between 40° and 75°, the said crown reinforcement being detached from the said internal layer (10) over a meridian distance equal to its width and being radially surmounted by the edges of two carcass half-plies (111, 112) which extend into the sidewalls (13) while being detached from the said edges, each carcass half-ply being formed of textile reinforcement elements orientated relative to the circumferential direction at an angle between 40° and 75°, the said edges on either side of the equatorial plane XX' being connected by at least one connecting ply (15) of textile elements, the assembly of the said edges and the connecting ply (15) being surmounted by a hooping reinforcement (16) composed of at least one ply (16) of circumferential textile elements, the reinforcing elements of the hooping ply (16) and those of the connecting ply (15) having strengths which enable them to break at a pressure differential p₀ - p'₁ present in the event of pressure loss from the internal cavity of the tyre, the said pressure differential being larger than the pressure differential p₀ - p₁ present during normal rolling.

2. Membrane according to Claim 1,
**characterised in that**
the hooping reinforcement (16) is partially detached from the assembly formed by the carcass half-plies (111, 112) and the ply (15) connecting the edges of the said half-plies.
